# EUROPEAN PATENT SPECIFICATION

(11) **EP 1 915 896 B1**
(45) Date of publication and mention of the grant of the patent: **30.05.2012**
(21) Application number: 07254184.0
(22) Date of filing: 22.10.2007
(51) Int. Cl.: A01D 34/535

(54) **A flail element for use on a vegetation cutting machine and a shaft for a vegetation cutting machine**
Schlegelelement zur Verwendung mit einer Vegetationsschneidmaschine und Welle für eine Vegetationsschneidmaschine
Élément à fléaux pour l'utilisation dans une machine de coupe de végétation et un arbre pour une machine de coupe de végétation

(30) Priority: 23.10.2006 GB 0621087
(43) Date of publication of application: 30.04.2008
(73) Proprietor: McConnel Ltd, Shropshire SY8 1JL (GB)
(72) Inventor: Frank, John E., Ludlow, Shropshire SY8 1PF (GB); Robertson, Ian, Ludlow, Shropshire SY8 1JE (DE)
(74) Representative: Croston, David

(56) References cited:
- GB-A- 1 548 889
- GB-A- 2 034 565

## Description

The invention relates to a flail element for use on a vegetation cutting machine and a shaft for such a vegetation cutting machine together with kits for adapting the flail element and shaft.

One type of vegetation cutting machine which is often used to cut roadside verges and hedges is known as a flail mower. An example flail mower can be seen in GB2034565. The flail mower generally comprises an elongate shaft with a series of pivotably mounted cutting tool known as flails. The shaft rotates normally at speeds between 1600rpm and 3500rpm and at those working speeds the flails swing out under the centrifugal force as the shaft rotates. The flail engages with the vegetation to be cut, for example, a hedge or grass verge and cutting occurs. It is common for the flails to move about their pivots when engaging vegetation, particularly when an obstruction or a particularly dense section of vegetation is encountered. The movement about the pivot mounting can be severe and can result in the flails impacting the rotor shaft. This generates unwanted noise and can also lead to damage of the flail or shaft, increasing wear on the device.

It is an object of the present invention to provide an improved flail element.

According to the first aspect of the invention there is provided a flail element according to claim 1.

In that way, if the flail element is caused to impact with the shaft, the impact is cushioned so as to reduce the noise generated and to lessen the effect of the impact upon the flail element itself and on the shaft.

The flail element may comprise a one-piece body. Alternatively, the flail element may comprise two pieces linked together, the first comprising the mounting formation and the second comprising the cutting head. In that case, the cushioning part can be arranged on either piece or on both pieces of the body.

The cushioning part may be formed from elastomeric material, for example natural or synthetic rubber or a plastics material, for example HDPE, polypropylene, nylon, polyurethane or a blend thereof.

The body of the flail element may comprise elastomeric material so as to form the cushioning part.

Alternatively, the cushioning part may comprise a pad attached to the body or a collar arranged around the body.

It is an object of a second aspect of the invention to provide an improved shaft for a vegetation cutting machine.

According to a second aspect of the invention there is provided a shaft for a vegetation cutting machine according to claim 9.

In that way, the effects of impact between the cutting element and the shaft are minimised.

The cushioning member may be an elastomeric material, such as natural or synthetic rubber or a plastics material. The cushioning member may comprise a pad or a collar and may be secured to the shaft by means of adhesive or by means of a fastener, for example a screw or nut and bolt.

The flail element and a shaft in accordance with the invention will now be described in detail by way of example and with reference to the accompanying drawings, in which:-
Fig.1 is an elevation of a flail element in accordance with the first aspect of the invention,
Fig.2 is an elevation of another flail element in accordance with the first aspect of the invention,
Fig.3 is a perspective view of a cushioning member and means for securing the cushioning member in accordance with the third or fourth aspects of the invention,
Fig.4 is a perspective view of a further cushioning member in accordance with the invention,
Fig.5 is a perspective view of part of a shaft in accordance with the second aspect of the invention carrying a flail element in accordance with the first aspect of the invention,
Fig.6 is an end elevation of a shaft similar to Fig.5 with two mounting formations and two flail elements shown, the rest being omitted for clarity.
Fig.7 is a perspective view of a cushioning member having an adhesive pad,
Fig.8 is an elevation of a further flail element in accordance with the invention.

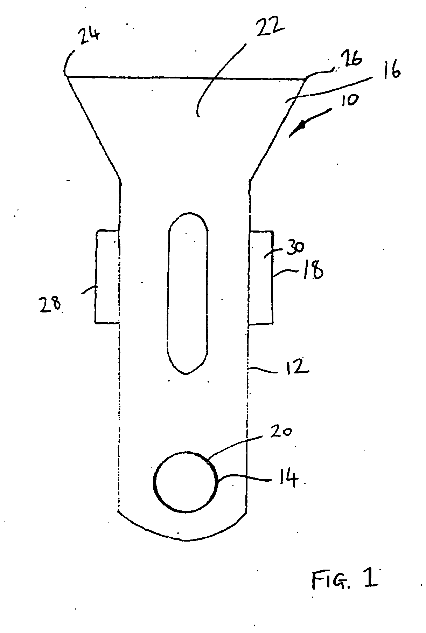

In Fig.1, a flail element 10 for use on a vegetation cutting machine such as a flail member comprises an elongate body 12, a mounting formation 14 at one end and a cutting head 16 at the opposite end. A cushioning part 18 is arranged on the body 12 between the mounting arrangement 14 and the cutting head 16. The body 12 is formed from forged steel.

The mounting formation 14 comprises a bore 20 formed through the body 12 transverse to the longitudinal axis thereof which bore can receive the shaft of a pivot mounting arrangement of a vegetation cutting machine.

The cutting head 16 comprises an outwardly flared head portion 22 with sharp cutting edges 24, 26 formed at opposite sides of the head portion 22.

The cushioning part 18 comprises elastomeric pads 28, 30 arranged on opposite sides of the body 12, on the same respective sides as the cutting edges 24, 26 but spaced therefrom.

The cushioning pads 28, 30 have sufficient depth that they encounter the shaft of the vegetation cutting machine before the respective cutting edge 24, 26 encounters the shaft. However, the cushioning pads 28, 30 are sufficiently shallow to allow the flail element 10 to pivot freely in normal operation.

The pads 28, 30 may be secured to the body 12 by means of adhesive or by separate fastener means, for example a nut and bolt arrangement. In Fig.1, the pads 28, 30 are secured by appropriate adhesive.

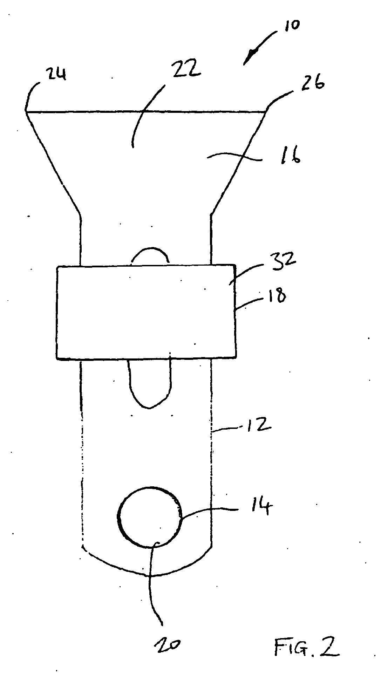

In Fig.2, another flail element is shown and parts corresponding to parts in Fig.1 carry the same reference numerals. The flail element of Fig.2 is substantially similar to the flail element of Fig.1 with the exception that the cushioning part comprises a collar 32 of cushioning material which is arranged around the body 12. The thickness of the collar is again intended to ensure that on encountering an obstruction and pivoting back towards the shaft, the cushioning part 18 encounters the shaft before either cutting edge 24, 26.

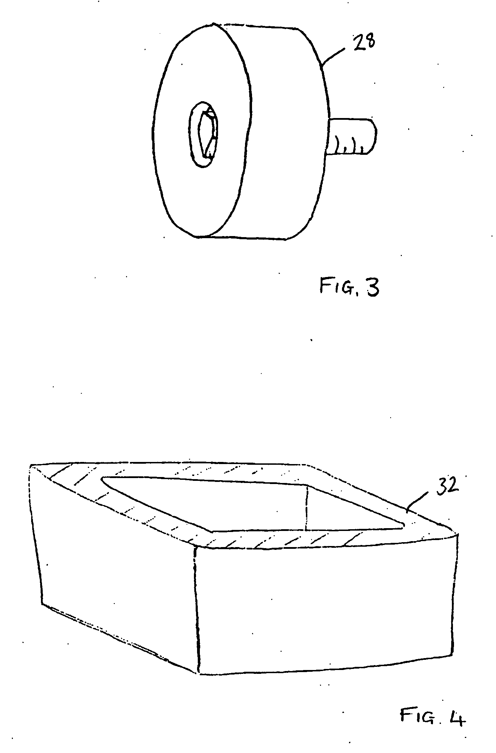

Fig.3 illustrates one type of cushioning pad 28, whilst Fig.4 shows the collar 32 of Fig.2.

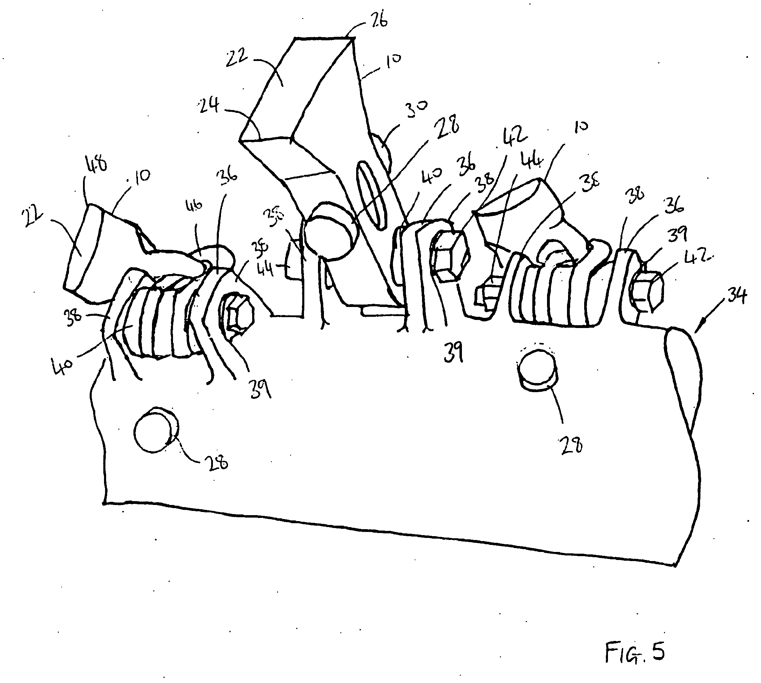

In Fig.5, a perspective view of part of a shaft 34 for a vegetation cutting machine is shown.

The shaft 34 has a series of mounting features 36 comprising spaced pairs of lugs 38 which project from the body of the shaft in a helical arrangement. Each pair of lugs 38 have a co-axial bore 39 formed therethrough and two different types of flail element 10 are shown mounted to the mounting features 36 by means of pivot shafts 40 which in turn are secured by means of nut 42 and bolt 44 arrangements extending through the bores 39.

In the case of the shaft 34 illustrated in Fig.5, the middle flail element is similar to that shown in Fig.1. It has a single piece body and is arranged with cushioning pads 28, 30 on opposite faces thereof, whilst the outer flail elements 10 have two piece bodies 46, 48. The first piece 46 is pivotally mounted to the pivot shaft 40 and the second piece 48 carries the cutting head 22. In the case of the outer flail elements, the cushioning pads 28 are arranged on the surface of the shaft 34 adjacent the mounting formations 36.

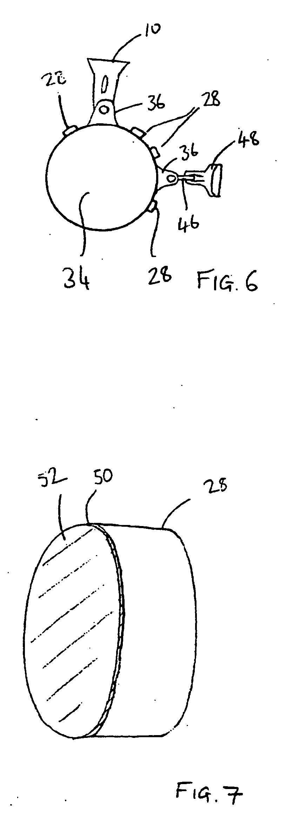

A similar shaft is illustrated in Fig.6 although in this case, the single piece flail element has the cushioning pads 28 arranged on the body of the shaft 34, not on itself.

In Fig.7 a further cushioning pad 28 is illustrated with a layer 50 of strong adhesive and a release liner 52. Pad 28 of Fig.7 can be used to retrofit existing vegetation cutting machine shafts or flail elements with the cushioning arrangements. The adhesive layer must be chosen so as to be compatible with the material used for cushioning but also to be sufficiently strong in bonding to the steel of the shaft or flail element to ensure secure attachment.

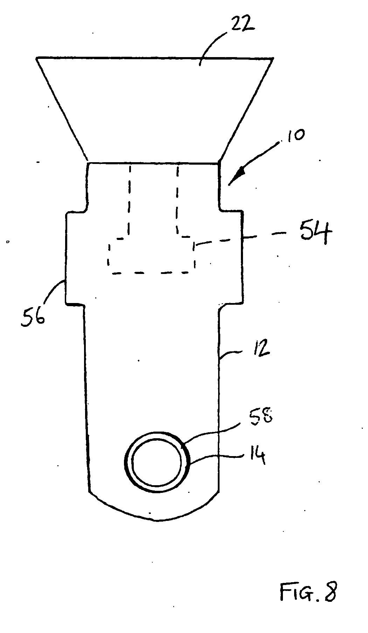

Fig.8 shows a further flail element in accordance with the invention. In this case, parts corresponding to parts in Figs.1 and 2 carry the same reference numerals. The body 12 comprises cushioning material, for example the elastomeric material, such as polyurethane whilst the cutting head 22 is formed as a separate steel body and is secured to the body 12 by means of an anchor arrangement 54 which is in-moulded into the body 12. The body 12 includes an integral cushioning part 56 which may simply project from opposite faces or may be annular. In this case, the mounting formation 14 in the form of the bore 20 at one end of the body 12 includes a steel bush 58 received within the bore 20 to minimise wear around the bore.

Although in the specific embodiments the cushioning part has been described as being formed from natural or synthetic rubber or polymer material, other materials may be used, for example a cork material or a fabric material. A foamed cellular material may be used such as foamed polyurethane.

Again, although the specific description of the embodiments describes securing the cushioning pad to the flail element or to the shaft by means of adhesive or by means of a fastener such as a screw or a nut and bolt or arrangement around the body of the flail element in the manner of a collar, other mounting arrangements are possible. For example, the pad could include a push-fit formation or any other suitable fixing method.

The cushioning part can be applied to any appropriate flail element and to any appropriate shaft in the manner described.

## Claims

1. A flail element (10) for use on a vegetation cutting machine comprising a mounting formation (14) at one end thereof to enable the element to be pivotally mounted on a shaft mounting of a cutting machine and a cutting head (16) at the other end thereof to enable it to cut vegetation **characterised in that** the flail element comprises a cushioning part (18) arranged between the mounting formation and the cutting head to cushion the element (10) against impacts with a shaft of a cutting machine.

2. A flail element according to claim 1, in which the flail element comprises a one-piece body (12).

3. A flail element according to claim 1, in which the flail element comprises two pieces liked together, the first comprising the mounting formation and the second comprising the cutting head.

4. A flail element according to claim 3, in which the cushioning part is arranged on the first piece.

5. A flail element according to claim 3, in which the cushioning part is arranged on the second piece.

6. A flail element according to any preceding claim, in which the cushioning part is formed from elastomeric material, for example natural or synthetic rubber or a plastics material, for example HDPE, polypropylene, nylon, polyurethane or other appropriate plastics material or blend of plastics materials.

7. A flail element according to claim 2 in which the body of the flail element comprises elastomeric material so as to form the cushioning part.

8. A flail element according to any of claims 1 to 6, in which the cushioning part comprises a pad (28, 30) attached to the body or a collar (32) arranged around the body.

9. A shaft (34) for a vegetation cutting machine comprising a mounting feature (36) arranged thereon for mounting a cutting element **characterised in that** the shaft comprises a cushioning member (28, 30) arranged on the shaft adjacent the mounting feature.

10. A shaft according to claim 9, in which the cushioning member is an elastomeric material, such as natural or synthetic rubber or a plastics material, for example polyurethane or other suitable plastics material.

11. A shaft according to claim 9 or 10, in which the cushioning member comprises a pad or a collar.

12. A shaft according to claim 9, 10 or 11, in which the cushioning member is secured to the shaft by means of adhesive or by means of a fastener, for example a screw or nut and bolt or by a push fitting arrangement.

## Patentansprüche

1. Schlegelelement (10) zur Verwendung an einem Vegetationsschneidgerät, enthaltend eine Befestigungsformation (14) an einem Ende davon, um eine schwenkbare Befestigung des Elements an einer Welleneinrichtung eines Schneidgeräts zu ermöglichen, und einen Schneidkopf (16) am anderen Ende davon, um ihm das Schneiden von Vegetation zu ermöglichen, **dadurch gekennzeichnet, dass** das Schlegelelement ein Dämpfungsteil (18) enthält, das zwischen der Befestigungsformation und dem Schneidkopf angeordnet ist, um das Element (10) gegen Anprall mit einer Welle eines Schneidgeräts zu dämpfen.

2. Schlegelelement nach Anspruch 1, bei dem das Schlegelelement einen Einstückkörper (12) enthält.

3. Schlegelelement nach Anspruch 1, bei dem das Schlegelelement zwei miteinander verbundene Teilstücke enthält, wobei das erste die Befestigungsformation enthält und das zweite den Schneidkopf enthält.

4. Schlegelelement nach Anspruch 3, bei dem das Dämpfungsteil am ersten Teilstück angeordnet ist.

5. Schlegelelement nach Anspruch 3, bei dem das Dämpfungsteil am zweiten Teilstück angeordnet ist.

6. Schlegelelement nach einem der vorherigen Ansprüche, bei dem das Dämpfungsteil aus einem Elastomermaterial ausgebildet ist, beispielsweise natürlichem oder synthetischem Gummi, oder einem Kunststoffmaterial, beispielsweise HDPE, Polypropylen, Nylon, Polyurethan oder einem anderen geeigneten Kunststoffmaterial oder einer Mischung von Kunststoffmaterialien.

7. Schlegelelement nach Anspruch 2, bei dem der Körper des Schlegelelements Elastomermaterial enthält, so dass es das Dämpfungsteil bildet.

8. Schlegelelement nach einem der Ansprüche 1 bis 6, bei dem das Dämpfungsteil ein am Körper angebrachtes Kissen (28, 30) oder einen um den Körper angeordneten Bund (32) enthält.

9. Welle (34) für ein Vegetationsschneidgerät, enthaltend eine Befestigungseinrichtung (36), die daran zur Befestigung eines Schneidelements angeordnet ist, **dadurch gekennzeichnet, dass** die Welle ein Dämpfungselement (28, 30) enthält, angeordnet an der Welle neben der Befestigungseinrichtung.

10. Welle nach Anspruch 9, bei der das Dämpfungselement ein Elastomermaterial ist, wie etwa natürlicher oder synthetischer Gummi, oder ein Kunststoffmaterial, beispielsweise Polyurethan oder ein anderes geeignetes Kunststoffmaterial.

11. Welle nach Anspruch 9 oder 10, bei der das Dämpfungselement ein Kissen oder einen Bund enthält.

12. Welle nach Anspruch 9, 10 oder 11, bei der das Dämpfungselement an der Welle mittels eines Klebstoffs oder mittels eines Befestigungselements, beispielsweise einer Ankerschraube oder einer Durchsteckschraube mit Mutter, oder mittels einer Steckverbindungsanordnung fixiert ist.

## Revendications

1. Elément à fléau (10) à utiliser sur une machine de coupe de la végétation comprenant un dispositif de montage (14) à une extrémité de ce dernier afin de permettre à l'élément d'être monté de façon pivotante sur un montage sur arbre d'une machine de coupe et une tête de coupe (16) à l'autre extrémité de ce dernier afin de lui permettre de couper la végétation, **caractérisé en ce que** l'élément de fléau comprend une pièce de rembourrage (18) agencée entre le dispositif de montage et la tête de coupe afin d'amortir l'élément (10) vis-à-vis de chocs avec un arbre d'une machine de coupe.

2. Elément de fléau selon la revendication 1, dans lequel l'élément de fléau comprend un corps en une pièce (12).

3. Elément de fléau selon la revendication 1, dans lequel l'élément de fléau comprend deux pièces jointes, la première comprenant le dispositif de formation et la seconde comprenant la tête de coupe.

4. Elément de fléau selon la revendication 3, dans lequel la pièce de rembourrage est agencée sur la première pièce.

5. Elément de fléau selon la revendication 3, dans lequel la pièce de rembourrage est agencée sur la seconde pièce.

6. Elément de fléau selon l'une quelconque des revendications précédentes, dans lequel la pièce de rembourrage est formée d'un matériau élastomère, par exemple du caoutchouc synthétique ou naturel ou d'une matière plastique, par exemple du PEHD, du poly(propylène), du nylon, du poly(uréthane) ou d'autres matières plastiques appropriées ou un mélange de matières plastiques.

7. Elément de fléau selon la revendication 2, dans lequel le corps de l'élément de fléau comprend un matériau élastomère afin de former la pièce de rembourrage.

8. Elément de fléau selon l'une quelconque des revendications 1 à 6, dans lequel la pièce de rembourrage comprend un patin (28, 30) attaché au corps ou un collier (32) agencé autour du corps.

9. Arbre (34) pour une machine de coupe de la végétation comprenant un organe de montage (36) agencé sur lui afin de monter un élément de coupe **caractérisé en ce que** l'arbre comprend un organe de rembourrage (28, 30) agencé sur l'arbre adjacent à l'organe de montage.

10. Arbre selon la revendication 9, dans lequel l'organe de rembourrage est un matériau élastomère tel que du caoutchouc naturel ou synthétique ou une matière plastique, par exemple du poly(uréthane) ou d'autres matières plastiques adaptées.

11. Arbre selon la revendication 9 ou 10, dans lequel l'organe de rembourrage comprend un patin ou un collier.

12. Arbre selon la revendication 9, 10 ou 11, dans lequel l'organe de rembourrage est fixé à l'arbre au moyen d'un adhésif ou au moyen d'une pièce de fixation, par exemple une vis ou un écrou et un boulon ou par un agencement d'ajustement par poussée.
